# EUROPEAN PATENT SPECIFICATION

(11) **EP 2 677 391 B1**
(45) Date of publication and mention of the grant of the patent: **12.07.2017**
(21) Application number: 13172709.1
(22) Date of filing: 19.06.2013
(51) Int. Cl.: G06F 1/16

(54) **Docking station for portable terminal**
Andockstation für ein tragbares Endgerät
Station d'accueil pour terminal portable

(30) Priority: 19.06.2012 KR 20120065348
(43) Date of publication of application: 25.12.2013
(73) Proprietor: Samsung Electronics Co., Ltd, Gyeonggi-do 443-742 (KR)
(72) Inventor: Lee, John-Gy, 443-742 Gyeonggi-do (KR)
(74) Representative: Nederlandsch Octrooibureau

(56) References cited:
- EP-A2- 2 613 218
- WO-A2-2014/088617
- US-A1- 2010 238 620
- US-A1- 2011 292 584

## Description

### BACKGROUND OF THE INVENTION

### 1. Field of the Invention

The present invention relates to a portable terminal, and more particularly to a docking station which enables a portable terminal to be variously used.

### 2. Description of the Related Art

In general, a portable terminal means a device that provides a function to allow a user to communicate with another user or to access a service provided by a service provider through a mobile communication base station while the user is carrying the portable terminal. Service areas through a portable terminal have rapidly expanded with the progress of mobile communication technologies and information and the communication industry. For example, although the early mobile communication services were limited to calling a counterpart, voice communication, or a short message transmission or the like, service areas have gradually expanded to a multimedia service to reproduce still/moving images, an entertainment service to produce games, and a financial service to provide mobile banking. Further, users of the mobile communication services have been gradually popularized from young people to older people.

Recently, multimedia services through a portable terminal have been strengthened, and portable terminals, such as smart phones and tablet PCs, that are functionally nearly at the level of conventional personal computers, are commercially available. Therefore, an environment is established in which an individual is capable of accessing the Internet or enjoying still/moving pictures, and even performing office work using a smart phone or a tablet PC while he or she is moving. As they are usually being equipped with a display device employing a touch screen in place of a keyboard having physical switches, portable terminals are provided in most instances with an enlarged display device.

When extending the functions of a smart phone or a tablet PC, a docking station is typically utilized as a considerably useful accessory device.

An example of the simplest docking station has a construction configured to charge a battery pack in a state in which a portable terminal is cradled. Since a portable terminal is typically provided with an interface connector, to which a charging cable can be directly connected, docking stations used only to charge a smart phone, a tablet PC, or the like, are gradually disappearing. However, as the multimedia functions of a portable terminal are strengthened, some kinds of charging cradles gradually take a form of a support to which a portable terminal may be cradled.

In addition, as a memory with a considerable capacity is incorporated in a portable terminal itself, it becomes possible to store various types of multimedia files in the portable terminal. Accordingly, a docking station has appeared which allows a portable terminal to be mounted thereon and to be connected to an external audio or video device. That is, a portable terminal to reproduce a multimedia file is coupled to a docking station so that sounds and/or images of the multimedia file can be output through a speaker or a display device installed on the docking station.

A docking audio is a representative example of such a multimedia docking station. An ordinary audio device reproduces a file stored in a storage media such as a compact disk (CD). As compared with the storage media for an ordinary audio device, a user may freely store a file in a portable terminal. Therefore, upon possessing a docking station which incorporates a function of an audio device, the user may use more various and plentiful multimedia contents through the portable terminal.

Further, a docking station of another type is a docking station configured to extend or add an input device of a portable terminal, specifically a keyboard. Since a smart phone or a tablet PC has come close to a home computer or a desk top in performance, it is possible to perform business-related work or to surf the web by only using the smart phone or the tablet PC. In addition, the smart phone or the tablet PC has an advantage of excellent mobility as compared to a notebook computer or the like. Similarly, carrying an input device-extended docking station is cumbersome as compared to simply carrying a portable terminal only. However, the docking station is useful during long-range transport by public transportation means, such as a train, or the like. That is, if desired during long-range transport, the user may utilize a portable terminal, such as a tablet PC, substantially in the same manner as a notebook computer through the input device-extended docking station.

In order to utilize such a docking station, it is evident that it is necessary to provide a structure that has a stable connection with the portable terminal. A portable terminal is typically provided with an interface connector to charge or to connect to an external device. The user connects a separate cable to the interface connector of the portable terminal to charge the portable terminal or to connect the portable terminal to an external device.

A conventional docking station is provided with a connector corresponding to such an interface connector. The connector of the docking station is configured to be inserted into the interface connector of the portable terminal by a predetermined depth. Therefore, there is an advantage in that the connection between the docking station and the interface terminal of the portable terminal can be established stably. However, there is a problem in that when an external force is applied to the docking station configured as described above in the state in which the portable terminal is connected to the docking station, the connector of the docking station or the interface connector of the portable terminal may be damaged. That is, if the portable terminal is moved in a direction in the state in which the docking station is fixed, the docking station or the portable terminal may be damaged at the connector connection part.

As an alternative, a docking station has been proposed in which a point contact connector configured to be point-contacted with a portable terminal is implemented using a pogo pin. The docking station configured to be connected with a portable terminal through the point contact connector has an advantage in that the docking station involves less risk of damage even if the portable terminal is moved in relation to the docking station since the docking station is not connected with the portable terminal at the connector part. However, when the portable terminal is moved in relation to the docking station, the point contact connector may lose its connection with the portable terminal.

In addition, when the portable terminal is moved within a predetermined range in the state in which the docking station provided with the point contact connector is fixed, connection and disconnection may be alternately repeated between the portable terminal and the docking station until the portable terminal is returned to its fixedly mounted position on the docking station. In such a case, there is a danger that a software error may be caused to make the portable terminal malfunction.

Accordingly, there is a need to have a docking station wherein when the portable terminal is moved in relation to the docking station by an external force, neither the docking station or portable terminal is damaged, where a connection between the portable terminal and docking station is not lost either permanently or temporarily, and where a software error does not occur that may cause the portable terminal to malfunction.

EP 2 613 218 A2, which falls under Article 54(3) EPC, discloses a mobile apparatus with a first body, a second body and a rotary adaptor including an accommodation portion to accommodate the second body via magnetic couplers, wherein the second body can be moved to be folded and unfolded in relation to the first body.

WO 2014/088617 A2, which falls under Article 54(3) EPC, presents flexible hinge and removable attachment techniques, such as a flexible hinge configured to communicatively and physically couple an input device to a computing device.

US 2010/238620 A1 discloses a computer system including a base unit, a display unit detachable from the base unit, and a set of magnetic elements in the display unit and/or the base unit to attach the display unit to the base unit and to hold the display unit in the open position.

US 2011/292584 A1 discloses a portable computer to be attached to a docking station, wherein the docking station includes a body, a base and a connecter, and wherein the base is movably connected to the body, the portable computer being able to move relative to the docking station.

### SUMMARY OF THE INVENTION

Accordingly, an exemplary aspect of the present invention is to solve the above-mentioned problems occurring in the prior art, and to provide a docking station which can be prevented from being damaged even when a portable terminal is moved by an external force.

Another exemplary aspect of the present invention is to provide a docking station which can maintain a stable connection condition even when a portable terminal is moved by an external force.

In accordance with an exemplary aspect of the present invention, there is provided a docking station for a portable terminal, as defined in claims 1 to 12.

### BRIEF DESCRIPTION OF THE DRAWINGS

The above and other exemplary aspects, features and advantages of the present invention will be more apparent from the following detailed description taken in conjunction with the accompanying drawings, in which:
FIG. 1 is a perspective view illustrating how to couple a portable terminal to a docking station according to an exemplary embodiment of the present invention;
FIG. 2 is a perspective view illustrating the portable terminal and the docking station illustrated in FIG. 1 in the state in which the portable terminal is coupled to the docking station and folded;
FIG. 3 is a side view illustrating a part of the portable terminal and the docking station illustrated in FIG. 1 in the state in which the portable terminal is coupled to the docking station and folded;
FIG. 4 is a perspective view illustrating a connection member for the docking station illustrated in FIG. 1;
FIG. 5 is a longitudinal sectional view of the connection member illustrated in FIG. 4;
FIG. 6 is a cross-sectional view illustrating the connection member of FIG. 4 installed in the docking station; and
FIG. 7 is a cross-sectional view illustrating the connection member of FIG. 4 movably coupled to the docking station.

### DETAILED DESCRIPTION OF EMBODIMENTS

Hereinafter, exemplary embodiments of the present invention will be described in detail with reference to the accompanying drawings. For the purposes of clarity and simplicity, a detailed description of known functions and configurations incorporated herein will be omitted as it may make the subject matter of the present invention unclear.

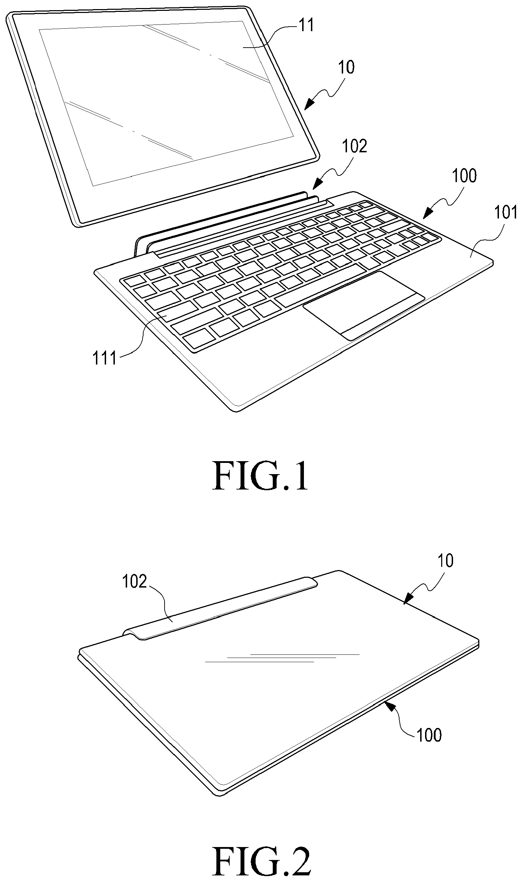

As shown in FIGs. 1 to 3, the docking station 100 according to an exemplary embodiment of the invention includes a body 101 which is provided with a keyboard 111 of a qwerty arrangement on one face of the body 101, in which the body 101 includes a docking member 102 provided adjacent to an edge of the face of the body 101. A portable terminal 10, such as a table PC, may be removably attached to the docking member 102. The portable terminal 10 is provided with a display device 11 on the front face of the portable terminal 10. Although not illustrated, some physical keys may be installed at a side of the display device 11 or on a lateral face of the portable terminal 10. In the state in which the portable terminal 10 is mounted on the docking station 100, a user may use the keyboard 111 as an input device. That is, it is possible to extend the input device of the portable terminal 10 by mounting the portable terminal 10 in the docking member 102 of the docking station 100.

Although the present exemplary embodiment exemplifies a construction in which the docking member 102 is mounted to be pivotable on the body 101, a certain product may not employ such a separate docking member 102 shown in FIGS. 1-3, or a certain product may be configured to have a docking member fixed to the body thereof. That is, a docking recess may be formed on the body of the docking station 100 such that a portable terminal can be removably attached to the docking recess. In addition, although the present exemplary embodiment exemplifies the docking member 102 which is configured to wrap a side edge of the portable terminal 10, it is possible to form a docking recess configured to wrap the side edge and the rear face on the body 101 without providing a docking member 102 as described above.

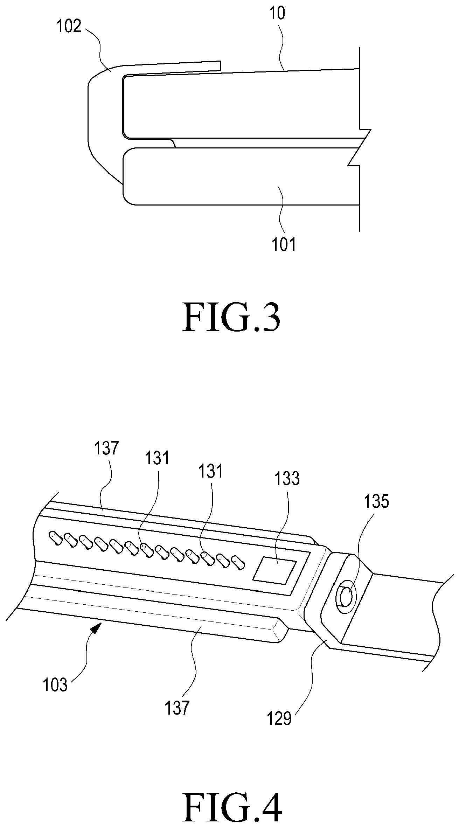

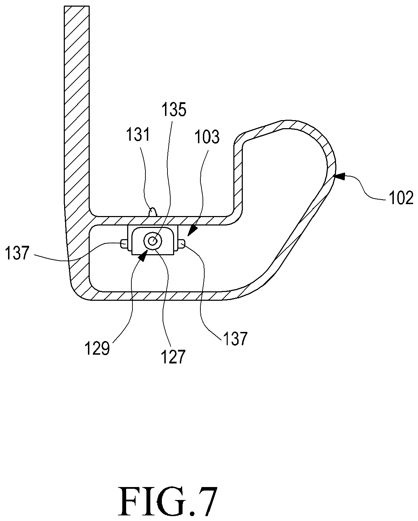

The docking member 102 is pivotably mounted at an edge of one face of the body 101. In order to couple the docking member 102 to the body 101 to be rotatable, the docking station 100 is provided with hinge lugs 135 that are connected to a connection member 103 mounted on the body 101 (see FIG. 7). Accordingly, as the docking member 102 pivots on the body 101, the portable terminal 10 mounted on the docking member 102 is capable of being folded to come into contact with the face of the body 101, more specifically the keyboard 111 as illustrated in FIG. 3. In addition, as desired, the user may rotate the portable terminal 10 mounted on the docking member 102 in relation to the body 101 to fold the portable terminal 10 as illustrated in FIG. 2. Therefore, the user may carry only the portable terminal 10, such as a tablet PC, or may couple the portable terminal 10 to the docking station 100 to carry or use the portable terminal 10 like a standard notebook computer. As a result, the docking station 100 may be used as cradle which is relatively convenient to carry and simple while extending the input device of the portable terminal 10.

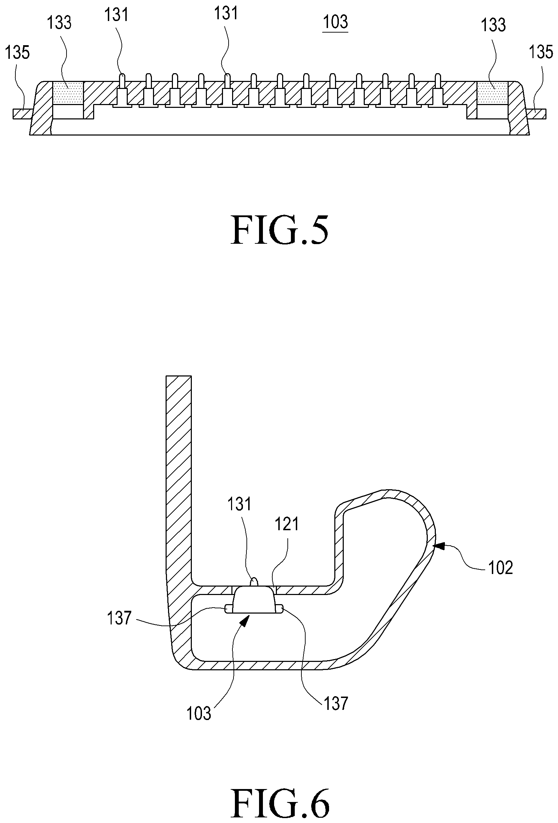

Referring to FIGS. 4 and 5, the docking station 100 includes a connection member 103 for electric connection with the portable terminal 10. The connection member 103 includes connection terminals 131 corresponding to the connector terminals provided on the portable terminal 10. Although the connection terminals 131 are illustrated as being arranged in a row on one face of the connection member 103, the connection terminals 131 may be arranged in two or three rows. The arrangement should be properly set depending on the specification of the portable terminal 10 mounted on the docking station 100.

The connection member 103 is mounted on the body 101 of the docking station 100, or more specifically, on the docking member 102 to be capable of being moved. Herein, the description that the connection member 103 is "moved" on the body 101 means that the connection terminal 131 is mounted on the body 101 to be movable up and down, and left and right as well as to be rotatable. In addition, although it is exemplified that the body 101 includes the docking member 102 pivotably coupled to one face thereof so that the portable terminal 10 can be removably attached to the docking member 102, it is possible to provide the docking member 102 to be fixed to the body 101, or to form a docking recess, to which the portable terminal 10 can be removably attached on the body 101 without providing a separate docking member. Therefore, although the exemplary embodiment exemplifies that the connection member 103 is installed on the docking member 102, the connection member 103 may be directly installed on the body 101.

Referring to FIG. 7, hinge lugs 135 extend from the opposite ends of the connection member 103, respectively. The hinge lugs 135 are coupled to the inside of the docking member 102 to be capable of being rotated while being moved up and down, and left and right. In order to couple the connection member 103 to the inside of the docking member 102, the docking station 100 may be provided with support members 129. The support members 129 are mounted adjacent to the opposite ends of the connection member 103, respectively, within the inside of the body 101, and more specifically within the inside of the docking member 102 such that each of the support members 129 wrap one of the hinge lugs 135. That is, the hinge lugs 135 are rotatably coupled to the inside of the docking member 102 in the state in which the hinge lugs 135 are wrapped by the support members 129, respectively.

Each of the support members 129 are formed with a hinge hole 127 for receiving one of the hinge lugs 135 as illustrated in FIG. 7. The diameter of the hinge holes 127 is larger than the cross-sectional diameter of the hinge lugs 135. The hinge lugs 135 are configured to be capable of being rotated within the hinge holes 127 as well as being moved up and down, left and right within a predetermined range. Consequently, since the hinge lugs 135 can be moved within the hinge holes 127, the connection member 103 is moved in order to move the connection terminals 131 up and down, and left and right.

Referring to FIGS. 6 and 7, the opposite lateral sides of the connection member 103 are formed with stoppers 137, respectively. As described below, the stoppers 137 prevent the inside of the docking member 102 from being exposed through an opening 121 (see FIG. 6) formed through one face of the docking member 102. For example, the face that wraps the edges of the portable terminal 10 when the portable terminal 10 is coupled to the docking member 102, and the stoppers 137 limit the rotation range of the connection member 103. Referring to FIG. 6 again, the opening 121 is formed in the docking member 102 to partially expose the connection member 103. When the connection member 103 is mounted within the docking member 102 through the support members 129, one face of the connection member 103, more specifically the connection terminals 131, are exposed to the outside of the docking member 102 through the opening 121. In such a case, the stoppers 137 protrude from the opposite lateral sides of the connection member 103, respectively, to shield the gaps between the inner walls of the opening 121 and the lateral sides of the connection member 103. As a result, the stoppers 137 block the exposure of the inside of the docking member 102 through the opening 121. In addition, when the connection member 103 is rotated about the hinge lugs 135, the stoppers 137 interfere with the inner peripheral surface of the docking member 102 to limit the rotation range of the connection member 103.

Consequently, the connection member 103, more specifically the connection terminals 131 can be moved up and down, and left and right on the docking member 102 as well as rotated within a predetermined angular range.

Referring to FIGS. 4 and 5, the connection member 103 is installed to be capable of being moved on the docking member 102, when the portable terminal 10 is mounted on the docking member 102, the connection member 103 approaches the portable terminal 10 to have the connection members 131 connected to the portable terminal 10. This can be realized by either installing an elastic body compressing the connection member 103 within the inside of the docking member 102, or by using an magnetic body 133 to produce an attractive force between the connection member 103 and the portable terminal 10. The present exemplary embodiment exemplifies that the docking station 100 is provided with magnetic bodies 133 which are installed on the connection member 103.

It is possible to provide only one magnetic body 133. However, since the connection terminals 131 are arranged in one row, it is preferable that a pair of magnetic bodies 133 are located adjacent to the opposite ends of the connection member 103, respectively, and that the connection terminals 131 are arranged between the magnetic bodies 133. In such an embodiment, the portable terminal 10 removably attached to the docking station 100 may be preferably provided with metal members or magnetic bodies 133 corresponding to the magnetic forces of the magnetic bodies 133.

If the docking station 100 is fabricated only for a specific product, it is possible to fabricate the product, i.e. a corresponding terminal, which is previously provided with metallic members or magnetic bodies. In such an embodiment, the connection member 103 may be attached and coupled to the portable terminal 10 by the attractive force between the metallic members or the metallic bodies installed in the portable terminal and the magnetic bodies 133. However, if factors, for example, the sizes of portable terminals and the positions of connector terminals of the portable terminals are standardized, and the docking station 100 can be universally used for the standardized portable terminals, the user may attach the metallic members or the magnetic bodies 133 to the portable terminals as desired. Of course, if the housing or the like of the portable terminal 10 is formed of a magnetizable material, it may be needless to provide the separate metal members or the magnetic bodies 133 in the standardized portable terminals.

Referring again to FIGS. 4 and 5, by installing the magnetic bodies 133 on the connection member 103 to produce attractive force between the connection member 103 and the portable terminal 10 mounted on the docking member 102, the connection terminals 131 can be stably connected with the connector terminals of the portable terminal 10. That is, when the portable terminal 10 is mounted on the docking member 102, the connection member 103 will be attached to the portable terminal 10 by the attractive force of the magnetic bodies 133, and the connection terminals 131 will be connected with the connector terminals of the portable terminal 10. That is, even if the connection member 103 is installed to be capable of being moved on the docking member 102, the connection member 103 will be stably coupled to the portable terminal 10 by the attractive force of the magnetic bodies 133 when the portable terminal 10 is mounted on the docking member 102.

Meanwhile, the connection terminals 131 may be constituted by pogo pins. When the connection member 103 is attached and coupled to the portable terminal 10 by the attractive force of the magnetic bodies 133, the connection terminals 131 constituted by the pogo pins are point-contacted with the connector terminals of the portable terminal 10. In such a case, even if the portable terminal 10 is moved within a predetermined range in the state in which it is mounted on the body 101, or more specifically on the docking member 102, since the connection member 103 is movable on the docking member 102, the connection member 103 may be maintained in the state in which the connection member 103 is attached to the portable terminal 10. This is because the connection member 103 tends to approach the portable terminal 10 by the attractive force of the magnetic bodies 133 in the state in which the portable terminal 10 is mounted on the docking station 100. Therefore, even if the portable terminal 10 is moved in the state in which it is mounted on the docking station 100, the connection terminals 131 can remain stably connected with the connector terminals of the portable terminal 10.

As described above, the inventive docking station can establish a stable electrical connection with a portable terminal since the docking station enables a connection member, in which connection terminals are arranged, to be attached and coupled to the portable terminal by magnetic bodies. In addition, since the connection member is configured to be capable of being moved within a predetermined range on the docking station, it is possible to prevent the connection between the portable terminal and the docking station from being disconnected even if the connection member is moved in the state in which the portable terminal is mounted on the docking station.

Although the present invention has been described in detail with reference to certain exemplary embodiments, it will be obvious to those skilled in the art that various modifications may be made without departing from the scope of the invention. For example, although it has been exemplified that a separate pivotable docking member is installed on the docking station, it is possible to form a docking recess for receiving a portable terminal on the body of the station as described above. In such an embodiment, the connection member should be installed to be movable on the body of the docking station. It will also be obvious to the skilled person that combinations of the various exemplary embodiments are possible and thus implicitly disclosed.

Furthermore, although it has been exemplified that the docking station is provided with a keyboard, it is obvious that the inventive connection member may be provided in a docking station, which is configured to provide a function for connecting a portable terminal with another device, for example a docking stand, on which a portable terminal may be cradled when it is desired to connect the portable terminal with an external device, or for example, a personal computer, a charging device, a video device, such as a television set or a beam projector, an audio device, such as a docking audio, of which a speaker device is mounted on the body of a docking station, or the like.

The docking station as described above is configured such that the connection member, in which the connection terminals are arranged, can be moved together with a portable terminal on the body of the docking station while being connected with the portable terminal using a point contact structure. Therefore, it is possible to reduce the risk of damage of the connection member due to the movement of the portable terminal. In addition, since the connection member may approach a portable terminal, for example by the attractive force of magnetic bodies or the like such that the connection terminals can be connected with the portable terminal, a stable connection condition can be maintained.

## Claims

1. A docking station (100) for a portable terminal (10), the docking station comprising:
a body (101) configured with a connection member (103) for removably connecting the portable terminal (10) to the body (101), the connection member (103) comprising connection terminals (131),
a pair of hinge lugs (135) extending from a pair of opposite ends of the connection member (103), respectively,
a pair of support members (129) mounted within an inside portion of the body (101), each of the pair of support members (129) being configured to wrap one of the pair of hinge lugs (135),
a pair of hinge holes (127) formed in the pair of support members (129) to receive the pair of hinge lugs (135), respectively, and
a pair of stoppers (137) formed along the opposite lateral sides of the connection member (103),
wherein the pair of hinge lugs (135) are wrapped by and rotatably coupled to the pair of support members (129), respectively,
wherein a diameter of each of the pair of hinge holes (127) is larger than a cross-sectional diameter of each the pair of hinge lugs (135) so that the pair of hinge lugs (135) are movable in the pair of hinge holes (127) and the connection member (103) is rotatable and movable up and down, left and right with respect to the docking station (100) within an angular range limited by the stoppers (137).

2. The docking station of claim 1, wherein the connection member (103) is configured so that, when the portable terminal (10) is mounted on the docking station (100), the connection terminals (131) of the connection member (103) approach the portable terminal (10) to connect the connection terminals (131) to the portable terminal (10) by either installing an elastic body compressing the connection member (103) within the inside of the docking member (102), or by using a magnetic body (133) to produce an attractive force between the connection member and the portable terminal.

3. The docking station (100) as claimed in claim 2, further comprising:
a magnetic body (133) installed on the connection member (103),
wherein the magnetic body (133) is configured so that, when the portable terminal (10) is being mounted, the connection member (103) approaches the portable terminal (10) to be attached to an outer peripheral surface of the portable terminal (10) by an attractive force between the magnetic body (133) and the portable terminal (10).

4. The docking station (100) as claimed in claim 3, wherein a pair of magnetic bodies (133) are arranged on the connection member (103), and the connection terminals (131) are arranged between the magnetic bodies (133).

5. The docking station (100) as claimed in any one of claims 1 through 4, the body (101) comprising:
a docking member (102) installed to be pivotable at a side edge of the body (101), and configured for removably attaching the portable terminal (10) to the docking member (102), the docking member (102) comprising the connection member (103).

6. The docking station (100) as claimed in claim 5, wherein the docking member (102) is configured so that when the portable terminal (10) is coupled to the docking member (102), the portable terminal can pivot together with the docking member (102) on the body (101) for allowing a portable terminal (10) to be folded to come into contact with one face of the body (101) or to be unfolded from the body (101).

7. The docking station (100) as claimed in claim 6, further comprising:
a keyboard (111) of a qwerty arrangement which is provided on the one face of the body (101),
wherein, when the portable terminal (10) is coupled to the docking member (102) and folded to the body (101), the keyboard (111) comes into contact with the portable terminal (10).

8. The docking station (100) as claimed in any one of claims 5 through 7, wherein the docking member (102) is coupled to wrap a side edge of the portable terminal (10).

9. The docking station (100) as claimed in any one of claims 5 through 8, wherein the connection member (103) is installed on the docking member (102) to be movable with respect to the docking member.

10. The docking station (100) as claimed in claim 9, further comprising:
an opening formed on one face of the docking member (102),
wherein the connection member (103) is installed within the inside of the docking member (102), and the connection terminals (131) protrude to an outside portion of the docking member (102) through the opening.

11. The docking station (100) as claimed in any of claims 1 to 10, wherein the connection terminals (131) are pogo pins for allowing the portable terminal (10) to remain in connection with the connection member (103) when the portable terminal (10) is moved within a predetermined range.

12. The docking station (100) as in claim 1, wherein the pair of hinge lugs (135) are configured on an inside portion of the docking station (100), such as a docking member (102), to allow the pair of hinge lugs (135) to rotate while moving up and down, left and right with respect to the body (101) of the docking station (100).

## Patentansprüche

1. Dockstation (100) für ein tragbares Endgerät (10), wobei die Dockstation Folgendes umfasst:
ein Gehäuse (101), das mit einem Verbindungselement (103) zum entfernbaren Verbinden des tragbaren Endgerätes (10) mit dem Gehäuse (101) konfiguriert ist, wobei das Verbindungselement (103) Verbindungsanschlüsse (131) umfasst,
ein Paar Scharnierlaschen (135), die sich jeweils von einem Paar entgegengesetzter Enden des Verbindungselementes (103) erstrecken,
ein Paar Halteelemente (129), die innerhalb eines Innenabschnittes des Gehäuses (101) angebracht sind, wobei jedes des Paares Halteelemente (129) konfiguriert ist, eine des Paares Scharnierlaschen (135) zu umschließen,
ein Paar Scharnierlöcher (127), die jeweils im Paar Halteelemente (129) gebildet sind, um das Paar Scharnierlaschen (135) aufzunehmen, und
ein Paar Anschläge (137), die entlang den entgegengesetzten seitlichen Seiten des Verbindungselementes (103) gebildet sind,
wobei das Paar Scharnierlaschen (135) jeweils vom Paar Halteelemente (129) umschlossen und drehbar mit diesem gekoppelt ist,
wobei ein Durchmesser jedes des Paares Scharnierlöcher (127) größer als ein Querschnittsdurchmesser jeder des Paares Scharnierlaschen (135) ist, sodass das Paar Scharnierlaschen (135) im Paar Scharnierlöcher (127) beweglich ist und das Verbindungselement (103) drehbar und nach oben und unten, links und rechts in Bezug auf die Dockstation (100) innerhalb eines Winkelbereiches beweglich ist, der durch die Anschläge (137) begrenzt ist.

2. Dockstation nach Anspruch 1, wobei das Verbindungselement (103) derart konfiguriert ist, dass, wenn das tragbare Endgerät (10) auf der Dockstation (100) angebracht ist, die Verbindungsanschlüsse (131) des Verbindungselementes (103) sich dem tragbaren Endgerät (10) nähern, um die Verbindungsanschlüsse (131) entweder durch Installieren eines elastischen Körpers, der das Verbindungselement (103) innerhalb der Innenseite des Dockelementes (102) zusammendrückt, oder durch Verwenden eines magnetischen Körpers (133), um eine Anziehungskraft zwischen dem Verbindungselement und dem tragbaren Endgerät zu erzeugen, mit dem tragbaren Endgerät (10) zu verbinden.

3. Dockstation (100) nach Anspruch 2, die ferner Folgendes umfasst:
einen Magnetkörper (133), der auf dem Verbindungselement (103) installiert ist,
wobei der Magnetkörper (133) derart konfiguriert ist, dass, wenn das tragbare Endgerät (10) angebracht ist, das Verbindungselement (103) sich dem tragbaren Endgerät (10) nähert, um an einer Außenumfangsfläche des tragbaren Endgerätes (10) durch eine Anziehungskraft zwischen dem Magnetkörper (133) und dem tragbaren Endgerät (10) befestigt zu werden.

4. Dockstation (100) nach Anspruch 3, wobei ein Paar Magnetkörper (133) auf dem Verbindungselement (103) angeordnet ist und die Verbindungsanschlüsse (131) zwischen den Magnetkörpern (133) angeordnet sind.

5. Dockstation (100) nach irgendeinem der Ansprüche 1 bis 4, wobei das Gehäuse (101) Folgendes umfasst:
ein Dockelement (102), das installiert ist, an einer Seitenkante des Gehäuses (101) schwenkbar zu sein, und zum entfernbaren Befestigen des tragbaren Endgerätes (10) am Dockelement (102) konfiguriert ist, wobei das Dockelement (102) das Verbindungselement (103) umfasst.

6. Dockstation (100) nach Anspruch 5, wobei das Dockelement (102) derart konfiguriert ist, dass, wenn das tragbare Endgerät (10) mit dem Dockelement (102) gekoppelt ist, das tragbare Endgerät zusammen mit dem Dockelement (102) auf dem Gehäuse (101) schwenken kann, um zu ermöglichen, dass ein tragbares Endgerät (10) geklappt wird, um in Berührung mit einer Fläche des Gehäuses (101) zu kommen, oder dass es vom Gehäuse (101) weggeklappt wird.

7. Dockstation (100) nach Anspruch 6, die ferner Folgendes umfasst:
eine Tastatur (111) in einer QWERTY-Anordnung, die auf der einen Fläche des Gehäuses (101) bereitgestellt ist,
wobei, wenn das tragbare Endgerät (10) mit dem Dockelement (102) gekoppelt und zum Gehäuse (101) geklappt ist, die Tastatur (111) mit dem tragbaren Endgerät (10) in Berührung kommt.

8. Dockstation (100) nach irgendeinem der Ansprüche 5 bis 7, wobei das Dockelement (102) gekoppelt ist, um eine Seitenkante des tragbaren Endgerätes (10) einzuhüllen.

9. Dockstation (100) nach irgendeinem der Ansprüche 5 bis 8, wobei das Verbindungselement (103) auf dem Dockelement (102) installiert ist, um in Bezug auf das Dockelement beweglich zu sein.

10. Dockstation (100) nach Anspruch 9, die ferner Folgendes umfasst:
eine Öffnung, die auf einer Fläche des Dockelementes (102) gebildet ist,
wobei das Verbindungselement (103) innerhalb der Innenseite des Dockelementes (102) installiert ist und die Verbindungsanschlüsse (131) durch die Öffnung zu einem Außenabschnitt des Dockelementes (102) herausragen.

11. Dockstation (100) nach irgendeinem der Ansprüche 1 bis 10, wobei die Verbindungsanschlüsse (131) Federkontaktstifte sind, um zu ermöglichen, dass das tragbare Endgerät (10) mit dem Verbindungselement (103) in Verbindung bleibt, wenn das tragbare Endgerät (10) innerhalb eines vorher festgelegten Bereiches bewegt wird.

12. Dockstation (100) nach Anspruch 1, wobei das Paar Scharnierlaschen (135) auf einem Innenabschnitt der Dockstation (100), wie z.B. einem Dockelement (102), konfiguriert ist, um es dem Paar Scharnierlaschen (135) zu ermöglichen, sich beim Bewegen nach oben und unten, links und rechts in Bezug auf das Gehäuse (101) der Dockstation (100) zu drehen.

## Revendications

1. Station d'accueil (100) pour un terminal portable (10), la station d'accueil comprenant :
un corps (101) configuré avec un organe de raccordement (103) pour raccorder, de manière amovible, le terminal portable (10) au corps (101), l'organe de raccordement (103) comprenant des bornes de raccordement (131),
une paire d'ergots de charnière (135) s'étendant respectivement depuis une paire d'extrémités opposées de l'organe de raccordement (103),
une paire d'organes de support (129) montés à l'intérieur d'une portion intérieure du corps (101), chacun de la paire d'organes de support (129) étant configuré pour entourer l'un de la paire d'ergots de charnière (135),
une paire de trous de charnière (127) formés dans la paire d'organes de support (129) pour recevoir respectivement la paire d'ergots de charnière (135), et
une paire de butées (137) formées le long des côtés latéraux opposés de l'organe de raccordement (103),
dans laquelle la paire d'ergots de charnière (135) sont entourés respectivement par la paire d'organes de support (129) et couplés à ceux-ci de manière à pouvoir tourner,
dans laquelle un diamètre de chacun de la paire de trous de charnière (127) est supérieur à un diamètre en coupe transversale de chacun de la paire d'ergots de charnière (135) de sorte que la paire d'ergots de charnière (135) puissent être déplacés dans la paire de trous de charnière (127) et l'organe de raccordement (103) peut tourner et se déplacer vers le haut et vers le bas, vers la gauche et vers la droite par rapport à la station d'accueil (100) à l'intérieur d'une plage angulaire limitée par les butées (137).

2. Station d'accueil selon la revendication 1, dans laquelle l'organe de raccordement (103) est configuré de sorte que, lorsque le terminal portable (10) est monté sur la station d'accueil (100), les bornes de raccordement (131) de l'organe de raccordement (103) s'approchent du terminal portable (10) pour raccorder les bornes de raccordement (131) au terminal portable (10) par l'installation d'un corps élastique compressant l'organe de raccordement (103) à l'intérieur de l'organe d'accueil (102), ou par l'utilisation d'un corps magnétique (133) pour produire une force d'attraction entre l'organe de raccordement et le terminal portable.

3. Station d'accueil (100) selon la revendication 2, comprenant en outre :
un corps magnétique (133) installé sur l'organe de raccordement (103),
dans laquelle le corps magnétique (133) est configuré de sorte que, lorsque le terminal portable (10) est monté, l'organe de raccordement (103) s'approche du terminal portable (10) à attacher à une surface périphérique extérieure du terminal portable (10) par une force d'attraction entre le corps magnétique (133) et le terminal portable (10).

4. Station d'accueil (100) selon la revendication 3, dans laquelle une paire de corps magnétiques (133) sont agencés sur l'organe de raccordement (103), et les bornes de raccordement (131) sont agencées entre les corps magnétiques (133).

5. Station d'accueil (100) selon l'une quelconque des revendications 1 à 4, dans laquelle le corps (101) comprend :
un organe d'accueil (102) installé de manière à pouvoir pivoter à un bord latéral du corps (101), et configuré pour attacher, de manière amovible, le terminal portable (10) à l'organe d'accueil (102), l'organe d'accueil (102) comprenant l'organe de raccordement (103).

6. Station d'accueil (100) selon la revendication 5, dans laquelle l'organe d'accueil (102) est configuré de sorte que, lorsque le terminal portable (10) est couplé à l'organe d'accueil (102), le terminal portable puisse pivoter solidairement avec l'organe d'accueil (102) sur le corps (101) pour permettre au terminal portable (10) d'être replié pour venir au contact d'une face du corps (101) ou d'être déplié du corps (101).

7. Station d'accueil (100) selon la revendication 6, comprenant en outre :
un clavier (111) d'un agencement qwerty qui est prévu sur la face du corps (101),
dans laquelle, lorsque le terminal portable (10) est couplé à l'organe d'accueil (102) et replié sur le corps (101), le clavier (111) vient au contact du terminal portable (10).

8. Station d'accueil (100) selon l'une quelconque des revendications 5 à 7, dans laquelle l'organe d'accueil (102) est couplé pour entourer un bord latéral du terminal portable (10).

9. Station d'accueil (100) selon l'une quelconque des revendications 5 à 8, dans laquelle l'organe de raccordement (103) est installé sur l'organe d'accueil (102) pour pouvoir se déplacer par rapport à l'organe d'accueil.

10. Station d'accueil (100) selon la revendication 9, comprenant en outre :
une ouverture formée sur une face de l'organe d'accueil (102),
dans laquelle l'organe de raccordement (103) est installé à l'intérieur de l'organe d'accueil (102), et les bornes de raccordement (131) font saillie vers une portion extérieure de l'organe d'accueil (102) à travers l'ouverture.

11. Station d'accueil (100) selon l'une quelconque des revendications 1 à 10, dans laquelle les bornes de raccordement (131) sont des broches à ressort pour permettre au terminal portable (10) de rester raccordé à l'organe de raccordement (103) lorsque le terminal portable (10) est déplacé à l'intérieur d'une plage prédéterminée.

12. Station d'accueil (100) selon la revendication 1, dans laquelle la paire d'ergots de charnière (135) sont configurés sur une portion intérieure de la station d'accueil (100), comme un organe d'accueil (102), pour permettre à la paire d'ergots de charnière (135) de tourner tout en se déplaçant vers le haut et vers le bas, vers la gauche et vers la droite par rapport au corps (101) de la station d'accueil (100).
